# EUROPÄISCHE PATENTSCHRIFT

(11) **EP 3 283 246 B1**
(45) Veröffentlichungstag und Bekanntmachung des Hinweises auf die Patenterteilung: **07.08.2019**
(21) Anmeldenummer: 16704474.2
(22) Anmeldetag: 02.02.2016
(51) Int. Cl.: B22D 17/20, B22D 19/00, B22C 23/00, B29C 45/37

(54) **VERFAHREN ZUM KENNZEICHNEN EINES GUSSTEILS**
METHOD FOR IDENTIFYING A CAST PART
PROCÉDÉ DE MARQUAGE D'UNE PIÈCE MOULÉE

(30) Priorität: 18.02.2015 DE 102015102308
(43) Veröffentlichungstag der Anmeldung: 21.02.2018
(73) Patentinhaber: Nemak, S.A.B. de C.V., 66000 García, Nuevo León (MX)
(72) Erfinder: BEHR, Thorsten, 66839 Schmelz (DE); GHODSTINAT, Matthias, 66763 Dillingen (DE)
(74) Vertreter: Cohausz & Florack
(86) Internationale Anmeldenummer: PCT/IB2016/000076
(87) Internationale Veröffentlichungsnummer: WO 2016/132196

(56) Entgegenhaltungen:
- EP-B1- 0 363 791
- EP-B1- 2 196 272
- WO-A2-2009/140950
- DE-U1-202008 018 295
- US-A1- 2013 220 567
- MEISSNER K ET AL: "Verfahren zur Markierung von Gussteilen während des Urformprozesses", GIESSEREI,, Bd. 96, Nr. 6, 2. Juni 2009 (2009-06-02), Seiten 52-61, XP001555806, ISSN: 0016-9765

## Beschreibung

Die Erfindung betrifft ein Verfahren zur Herstellung eines mit lesbarer Information versehenen Gussteils.

Zu den erfindungsgemäß hergestellten Gussteilen werden hier allgemein gießtechnisch erzeugte Bauteile im fertig erstarrten und entformten gezählt. Gussteile der erfindungsgemäß erzeugten Art sind daher von den für ihre gießtechnische Erzeugung benötigten Formelementen, wie Speiser, Anschnitte, Zuläufen, Nähten und desgleichen befreit, wie sie üblicherweise nach dem Erstarren durch eine in der Fachsprache auch als "Putzen" bezeichnete Nachbearbeitung entfernt werden.

Insbesondere handelt es sich bei den erfindungsgemäß erzeugten Gussteilen um Bauteile für die Herstellung von Verbrennungsmotoren. Zu den erfindungsgemäß erzeugten Gussteilen gehören daher speziell für Verbrennungsmotoren bestimmte Zylinderköpfe und Kurbelgehäuse.

An die Qualität von im praktischen Einsatz hoch belasteten Werkstücken der hier in Rede stehenden Art werden immer höhere Anforderungen gestellt. Dies betrifft sowohl ihre mechanischen Eigenschaften, als auch ihre Maßhaltigkeit. Da die Qualität eines Gussstücks entscheidend durch den Herstellprozess beeinflusst wird, wird es deshalb zunehmend wichtiger, die verschiedenen bei der Herstellung von Gusswerkstücken durchlaufenen Prozessschritte nachzuverfolgen und dem jeweiligen Gussteil zuzuordnen. Angestrebt wird hier die vollständige Kenntnis und Nachvollziehbarkeit aller im Herstellungsprozess wesentlichen Einflussgrößen, die sich auf die Qualität oder Gebrauchseigenschaften des jeweiligen Gießprodukts auswirken könnten. Eine solche Rückverfolgbarkeit von jedem Gussstück individuell zugeordneten Produktionsdaten erlaubt es, aus festgestellten Produktionsmängeln zu lernen und entsprechende Korrekturen am Herstellungsprozess vorzunehmen. Auf diese Weise gelingt eine laufende Prozessoptimierung.

In dieser Hinsicht wichtige Produktionsdaten sind beispielsweise der Produktionszeitpunkt, Gießgeschwindigkeit, Gießtemperaturen, Art der Produktionsanlage etc.

Eine aus dem Stand der Technik bekannte Möglichkeit, die für eine eindeutige Individualisierung des jeweiligen Gussteils notwendigen Informationen mit der erforderlichen Detailtiefe am Gussteil anzubringen, besteht darin, einen in einer Gießform zum Abformen von Hohlräumen, Kanälen oder der Außenkontur des Gussteils eingesetzten Gießkern mittels eines Lasers mit einem Negativabbild einer eindeutigen Zeichenfolge zu versehen, die im Zuge des Gießvorgangs am Gusskörper abgebildet wird und dort nach dem Gießen sichtbar ist.

Am Gussteil abgebildete Informationen können im Gießprozess mit einer automatisch arbeitenden Einrichtung, wie sie beispielsweise in der JP 04 075761 beschrieben ist, erfasst werden.

Für eine einfache Möglichkeit einer Kennzeichnung eines Gussteils wird in der EP 0 363 791 B1 vorgeschlagen, im unmittelbaren Anschluss an das Gießen ein Informationen über das jeweilige Gussteil enthaltendes Schild so auf die Oberfläche der noch fließfähigen Schmelze zu legen, dass es dort schwimmt und an ihm vorhandene Vorsprünge in die Schmelze greifen. Nach dem Erstarren haftet das Schild dann fest am erhaltenen Gussteil. Allerdings muss für diese Vorgehensweise ein größerer Oberflächenabschnitt der in die Gießform eingegossenen Schmelze frei zugänglich sein. Dies bedingt eine offene Gießform, wie sie bei vielen modernen Gießverfahren nicht möglich ist.

Um dieses Problem zu lösen, ist in der EP 2 196 272 B1 vorgeschlagen worden, einen als Kennzeichnungselement dienenden Codeträger vorzufertigen und diesen Codeträger dann mit mindestens einem Abschnitt in den Speiser oder ein anderes Formelement des nach dem Erstarren und Entformen erhaltenen Gussrohteils einzugießen. Auf diese Weise ist der Codeträger unlösbar mit dem Gussrohteil verbunden. Die auf ihm enthaltene Information kann problemlos erfasst und beispielsweise in einer Datenverarbeitungseinrichtung automatisch dem jeweiligen Gussteil zugeordnet werden. Allerdings geht die durch den Codeträger ermöglichte eindeutige Identifizierung des Gussrohteils wieder verloren, wenn im Zuge des Putzens diejenigen Formelemente - und mit ihnen der mit einem von ihnen verbundene Codeträger - von dem Gussteil abgetrennt werden, die zwar für die gießtechnische Herstellung erforderlich, jedoch nicht als funktionaler Bestandteil des fertigen Gussteils benötigt werden.

Vor diesem Hintergrund ergab sich die Aufgabe, ein Verfahren zu schaffen, welches die Herstellung von Gussteilen ermöglicht, die dauerhaft, insbesondere auch im gebrauchsfertigen Zustand, mit lesbaren Informationen versehen sind.

Erfindungsgemäß ist diese Aufgabe dadurch gelöst worden, dass bei der gießtechnischen Herstellung von Gussteilen mindestens die in Anspruch 1 angegebenen Arbeitsschritte durchlaufen werden.

Vorteilhafte Ausgestaltungen der Erfindung sind in den abhängigen Ansprüchen angegeben und werden nachfolgend wie der allgemeine Erfindungsgedanke im Einzelnen erläutert.

Beim erfindungsgemäßen Verfahren zur Herstellung eines mit lesbarer Information versehenen Gusskörpers werden somit folgende Arbeitsschritte durchlaufen
a) Bereitstellen eines Kennzeichenelements,
   - das an einer Seite eine mit Information versehene Informationsfläche und
   - an einer anderen Seite eine dem Gussteil zugeordnete Gussteilfläche aufweist, an der ebenfalls eine Information vorhanden ist;
b) Anordnen des Kennzeichenelements in einer Gießform, die einen das zu gießende Gussteil abbildenden Formhohlraum umgrenzt, wobei das Kennzeichenelement an einer dem Formhohlraum zugeordneten Gießformfläche derart angeordnet wird, dass die Informationsfläche gegenüber dem Formhohlraum abgedeckt ist, während die Gussteilfläche des Kennzeichenelements frei liegend dem Formhohlraum zugeordnet ist;
c) Abgießen einer Metallschmelze in die Gießform unter Benetzung der Gussteilfläche des Kennzeichenelements mit Metallschmelze;
d) Erstarren der Metallschmelze zu dem Gussteil, wobei sich während des Abgießens oder des Erstarrens eine stoff-, form- oder kraftschlüssige Anbindung des Kennzeichenelements an das Gussteil ergibt und sich die an der Gussteilfläche vorhandene Information während des Abgießens oder des Erstarrens der Metallschmelze nach Art eines Stempels an der zugeordneten Fläche des Gussteils abbildet;
e) Entformen des Gussteils aus der Gießform
f) Putzen des Gussteils.

### Entscheidend für die Erfindung ist, das ein

Kennzeichenelement eingesetzt wird, das an zwei unterschiedlichen Flächen Informationen trägt und zwar zum einen an einer Fläche, nämlich der Gussteilfläche, die beim Abguss der Metallschmelze in die Gießform mit der Metallschmelze in Berührung kommt, so dass sich die an der Gussteilfläche vorhanden Information in Folge des Kontakts mit dem Metall des Gussteils an der zugeordneten Fläche des Gussteils nach Art eines Stempels überträgt und dort vorhanden ist, wenn das Gussteil fertig erstarrt ist.

Gleichzeitig entsteht eine form-, stoff- oder kraftschlüssige Anbindung des Kennzeichenelements an das fertig erstarrte Gussteil.

Diese erfolgt beispielsweise über den Kontakt der in den Formhohlraum beim Abgießen einströmenden Metallschmelze mit der Gussteilfläche selbst, über ein Umfließen oder Anströmen des Abschnitts des Kennzeichenelements, an dem die Gussteilfläche ausgebildet ist, oder über an dem Kennzeichenelement zusätzlich vorgesehene, ebenfalls von Metallschmelze angeströmter, gefüllter oder umschlossener Formelemente und desgleichen.

Die erstarrende Metallschmelze umklammert auf diese Weise das Kennzeichenelement mindestens an seinem Randbereich und bewirkt so eine form- und gegebenenfalls auch kraftschlüssige Anbindung. Abhängig von der Art des Materials, aus dem das Kennzeichenelement besteht, kann es zusätzlich oder alternativ zu einem Anschmelzen der von Metallschmelze benetzten Abschnitte des Kennzeichenelements kommen, so dass eine stoffschlüssige Verbindung zwischen dem aus der Metallschmelze gebildeten Gussteil und dem Kennzeichenelement entsteht.

Bei den zur Unterstützung der Anbindung des Kennzeichenelements an das Gussteil vorgesehenen Formelementen kann es sich um in das Kennzeichenelement eingeformte Einschnitte, Öffnungen und Kanäle handeln, in die die Metallschmelze eindringt, wenn der Formhohlraum beim Abguss mit Schmelze befüllt wird. Ebenso kann es sich bei den Formelementen um Vorsprünge, Absätze und desgleichen handeln, die bei in der Gießform angeordnetem Kennzeichenelement in den Formhohlraum vorstehen und von der beim Abguss in den Formhohlraum gelangenden Schmelze umschlossen werden.

Zum anderen trägt das Kennzeichenelement an einer von der Gussteilfläche abgesetzten anderen Fläche, nämlich der Informationsfläche, ebenfalls Informationen. Die Informationsfläche ist dabei entfernt von der Gussteilfläche angeordnet und zwar derart, dass bei in der Gießform positioniertem Kennzeichenelement die Informationsfläche gegenüber dem Formhohlraum abgeschottet ist und dementsprechend beim Befüllen des Formhohlraums nicht oder allenfalls in geringem, die Lesbarkeit der von ihr getragenen Information nicht beeinträchtigendem Maße mit der Metallschmelze in Berührung kommt.

Bei erfindungsgemäßer Vorgehensweise trägt das nach dem Erstarren und Entformen erhaltene Gussrohteil das fest mit ihm verbundene Kennzeichenelement, das über die an seiner nun frei liegenden Informationsfläche vorhandene Information zuverlässig eine eindeutige und individuelle Identifizierung des jeweiligen Gussteils ermöglicht.

Das nach dem Entformen erhaltene Gussteil kann nun die für seine Fertigstellung üblicherweise durchlaufenen Nachbearbeitungsschritte absolvieren. Insbesondere kann das Gussteil geputzt werden, um die an ihm noch vorhandenen Speiser, Zuläufe, Anschnitte, Nähte sowie anhaftende Reste der Gießform mechanisch zu entfernen.

Im Zuge des Putzens wird das Gussteil üblicherweise einer Strahlbehandlung unterzogen, bei der das Gussteil einem Strahl von Partikeln, die mit hoher kinetischer Energie auf das Gussteil treffen, ausgesetzt wird. Während dieses Vorgangs ist zwar auch die frei liegende Informationsfläche des Kennzeichenelements dem gezielten mechanischen Angriff ausgesetzt, so dass die auf ihr abgebildete Information möglicherweise zerstört wird. Jedoch ist die an dem Gussteil anliegende Gussteilfläche und der von ihr abgedeckten und mit der von der Gussteilfläche übertragenen Information versehenen Flächenabschnitt des Gussteils gegen die Strahlbehandlung durch den Abschnitt des Kennzeichenelements geschützt, an dem die Gussteilfläche vorhanden ist.

Wird in einem letzten Schritt des Putzvorgangs das Kennzeichenelement von dem Gussteil abgetrennt, so trägt das Gussteil an der zuvor von der Gussteilfläche des Kennzeichenelements abgedeckten Stelle frei sichtbar die von der Gussteilfläche auf sie übertragene Information.

Durch die erfindungsgemäße Vorgehensweise gelingt es also, mit denkbar einfachen Mitteln am fertigen Gussteil komplexe Informationen abzubilden, die dort dauerhaft bleiben und von jeder geeigneten automatischen Leseeinrichtung erfasst werden können.

Erfindungsgemäß erzeugte Gussteile können sämtliche Arbeitsschritte durchlaufen, die bei der Herstellung solcher Gussteile üblicherweise vorgesehen sind. So können die Gussteile eine Wärmebehandlung durchlaufen, um ihre mechanischen Eigenschaften einzustellen.

Das erfindungsgemäße Verfahren eignet sich besonders für solche Verfahren, bei denen das Gussteil in einer Gießform abgegossen wird, die mindestens im Bereich derjenigen ihrer Flächen, an der Kennzeichenelement angeordnet wird, aus einem Gießkern besteht. Dieser kann in an sich bekannter Weise aus einem Formsand, einem den Formsand bindenden Binder und optionale Additive enthaltenden Formstoff hergestellt sein und wird nach der Entformung des Gussteils zerstört. Insbesondere eignet sich das erfindungsgemäße Verfahren für die gießtechnische Herstellung von Gussteilen in Gießformen, die in ebenso an sich bekannter Weise als ein aus einer Vielzahl solcher Gießkerne zusammengesetztes Kernpaket ausgebildet ist.

Für die Herstellung des erfindungsgemäß eingesetzten und gestalteten Kennzeichenelements eignet sich jedes Material, dessen Temperaturbeständigkeit so hoch ist, dass es bei Kontakt mit der Metallschmelze seine Form beibehält, und bei dem es durch den Kontakt mit der Metallschmelze zu keinen Reaktionen kommt, durch die die Eigenschaften der Metallschmelze oder des aus ihr gegossenen Gussteils nachhaltig beeinträchtigt werden. Insbesondere kann das Kennzeichenelement aus einem Blech bestehen, das aus Stahl- oder Aluminium-Werkstoff hergestellt ist.

Das Kennzeichenelement kann streifenförmig ausgebildet sein. Bei dieser Ausgestaltung bildet die Oberfläche der einen Seite des Streifens die Gussteilfläche und die Oberfläche der gegenüberliegenden Seite die Informationsfläche des Kennzeichenelements. Die Information an der Informationsfläche ist dann gegenüberliegend zur Information an der Gussteilfläche des Kennzeichenelements angeordnet. Das streifenförmig ausgebildete Kennzeichenelement kann vor dem Abguss auf einfache Weise mit seiner Informationsfläche flach und dicht an einer entsprechend ebenen Fläche der Gießform angeordnet werden.

Erforderlichenfalls kann in der Gießform eine Aufnahme vorgesehen sein, in der sich zumindest der Abschnitt des Kennzeichenelements formschlüssig oder flächenbündig einsetzen lässt, der die Informationsfläche trägt.

Um bei einem streifenförmigen Kennzeichenelement maximale Möglichkeiten bei der Gestaltung der Information zu haben, kann es zweckmäßig sein, die Informationen an der Informations- und der Gussteilfläche des Kennzeichenelements versetzt zueinander anzuordnen.

Letzteres ist insbesondere dann vorteilhaft, wenn die Information an der Gussteilfläche erhaben oder in die Gussteilfläche eingeprägt ausgebildet ist.

Eine erhabene oder eingeprägte Darstellung der jeweils auf der Gussteilfläche vorgesehenen Information lässt sich auf besonders einfache Weise auf das Gussteil übertragen, indem das an der Gussteilfläche vorhandene, ein Negativ der auf das Gussteil zu übertragenden Information darstellende Muster in die zugeordnete Fläche des Gussteils hinein gedrückt wird. Ein Einprägen, Ausformen, Eingravieren oder Auftragen der an der Informationsfläche vorgesehenen Information hat den Vorteil, dass derart dargestellte Informationen auch nach abrasiver Belastung, wie sie im rauen Gießbetrieb vielfach vorkommt, noch über eine ausreichend lange Dauer lesbar ist.

Es ist aber ebenso denkbar, die Information mit geeigneten Farben oder desgleichen auf die Gussteil- oder Informationsfläche aufzubringen. Das Material der auf der Gussteilfläche aufgetragenen Information kann dabei so gewählt werden, dass es bei Kontakt mit der Schmelze zur Übertragung auf das Gussteil kommt.

Unabhängig davon, wie die Übertragung im Einzelfall erfolgt, wird die Information über die Gussteilfläche des Kennzeichenelements dem Gussteil jeweils wie mit einem Stempel aufgedrückt.

Alternativ zu einer streifenförmigen Gestaltung kann das Kennzeichenelement auch nach Art eines Winkelstücks, insbesondere eines Blechwinkels, ausgebildet sein. Ist an dem einen Schenkel des Winkelstücks die Gussteilfläche und an seinem anderen Schenkel die Informationsfläche vorgesehen, so ist die gegenüber einer Benetzung mit Schmelze geschützte Positionierung der Informationsfläche in der Gießform besonders einfach. So kann nämlich der die Informationsfläche tragende Schenkel in einer schlitzförmigen Aufnahme sitzen, die in die zugeordnete Fläche der Gießform eingeformt ist.

Im Fall, dass die jeweilige Fläche der Gießform an einem Gießkern ausgebildet ist, kann das Kennzeichenelement bereits bei der Herstellung des Gießkerns an ihm so angeordnet werden, dass es beim Zusammenbau der Gießform seinen ordnungsgemäßen Platz behält.

Die an dem Kennzeichenelement vorgesehenen Informationen können in an sich bekannter Weise maschinenlesbar sein. Informationen dieser Art werden beispielsweise in Form von Buchstaben- und sonstigen Zeichenfolgen, Punkten, Strichen oder Schraffierungen auf dem Kennzeichenelement aufgebracht. Sie können durch ein optisches Abtastsystem sicher erkannt werden und erlauben beispielsweise das Abspeichern eines umfangreichen Informationsgehaltes in Form von redundanten Daten, die auch dann noch eine eindeutige Identifikation des jeweiligen Gusskörpers erlauben, wenn die vom Kennzeichenelement getragene Information teilweise unlesbar ist.

Die am Kennzeichenelement vorgesehene Information kann nach Art eines Data Matrix Codes (DMC) dargestellt sein. Für diesen von der Internationalen Organisation für Normung (ISO) genormten Code stehen auf dem Markt kostengünstige Schreib- und Lesegeräte zur Verfügung.

Denkbar sind aber auch andere Formen der Codierung, die von einem erfindungsgemäß vorgesehenen Kennzeichenelements getragen werden können. So ist es beispielsweise möglich, an Stelle eines optisch lesbaren Codes eine mittels eines geeigneten Lesegerätes auslesbare Transponder-Codierung vorzusehen, wenn der jeweilige Transponder ausreichend hitzebeständig ist oder während des Gießvorgangs so geschützt angeordnet wird, dass er nicht überhitzt. So kann das Kennzeichenelement beispielsweise einen RFID-Chip (Radio Frequency Identification) tragen, der mit Radiowellen berührungslos ausgelesen werden kann.

Die erfindungsgemäß vorgesehene separate Vorfertigung des Kennzeichenelements erlaubt es, das Kennzeichenelement bereits außerhalb der Gießform mit dem maschinenlesbaren Code zu versehen.

Die Anordnung des maschinenlesbaren Codes auf einem gesondert hergestellten und dann im Zuge des Gießens mit dem Gießkörper verbundenen Kennzeichenelement erlaubt es, Codes zu verwenden, die einen umfangreichen Informationsinhalt umfassen. So kann die auf dem Kennzeichenelement abgelegte Information aus Daten bestehen, über die der Zeitpunkt oder die Parameter der gießtechnischen Herstellung des Gussteils ermittelbar ist. Jedoch ist es nicht zwingend notwendig erforderlich, die für die Rückverfolgung der wesentlichen Produktionsparameter benötigten Daten im vom Kennzeichenelement getragenen Code selbst zu hinterlegen. Vielmehr reicht es bei entsprechender Vorgehensweise aus, wenn der Code den jeweiligen Gusskörper im Sinne eines eindeutigen, unverwechselbaren Kennzeichens individualisiert. Bei diesem Kennzeichnen kann es sich beispielsweise um eine Nummer aus einem fortlaufenden Nummernkreis handeln.

Durch eine ausreichend eindeutige Individualisierung des jeweiligen Gussteils kann dem Gussteil beispielsweise seine vollständige, in einer Datenbank abgelegte Herstellungshistorie zugeordnet werden. Hierzu kann das Gussteil nach seiner Entformung anhand der auf der Informationsfläche vorhandenen Information identifiziert und ihm in einer Datenbank die Ist-Werte der Betriebsparameter zugeordnet werden, die bei seiner gießtechnischen Herstellung und der sich daran anschließenden Behandlungsschritte, insbesondere einer sich unmittelbar an das Erstarren anschließenden, mit der Entformung einhergehenden Wärmebehandlung, zur Anwendung gekommen sind.

Soll das Gussteil nach seiner ersten eindeutigen Identifizierung weitere Arbeitsschritte durchlaufen, bei denen es zu einer Beeinflussung seiner Eigenschaften kommen könnte, so können selbstverständlich die bereits in der Datenverarbeitungseinrichtung abgelegten Daten des Gussteils mit jedem Verfahrensschritt, den das Gussteil durchläuft, um die zugehörigen Daten ergänzt werden.

Nachfolgend wird die Erfindung anhand einer ein Ausführungsbeispiel darstellenden Zeichnung näher erläutert. Es zeigen jeweils schematisch:
- Fig. 1: eine Gießform in seitlicher Ansicht;
- Fig. 2: die Gießform gemäß Fig. 1 in geöffnetem Zustand in einer teilweise aufgebrochenen Draufsicht;

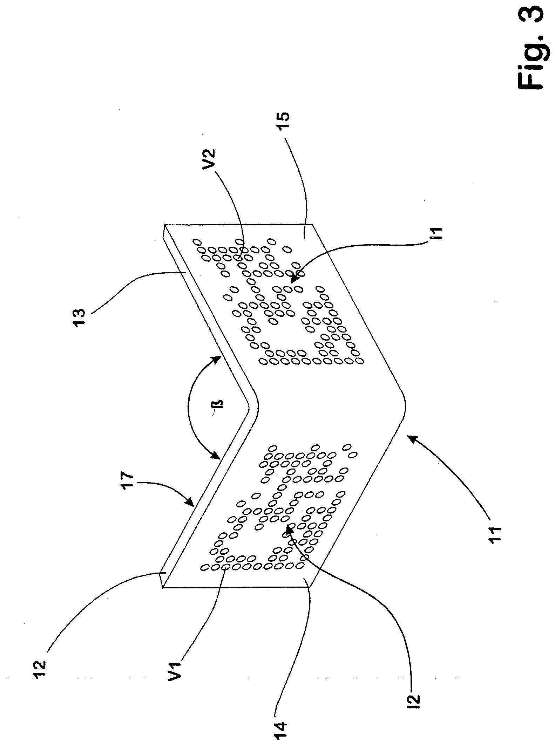

- Fig. 3: ein winkelförmiges erstes Kennzeichenelement in einer perspektivischen Ansicht;

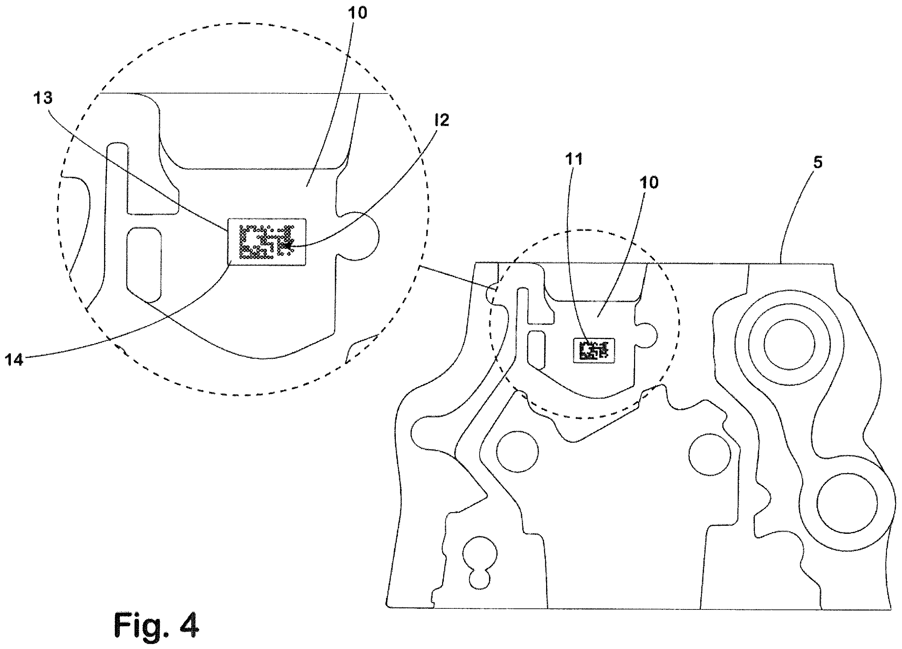

- Fig. 4: einen Stirnseitenwandkern der Gießform gemäß Fig. 1 mit dem in Fig. 3 dargestellten Kennzeichenelement in einer frontalen Ansicht auf seine dem Formhohlraum der Gießform zugeordneten Seite;

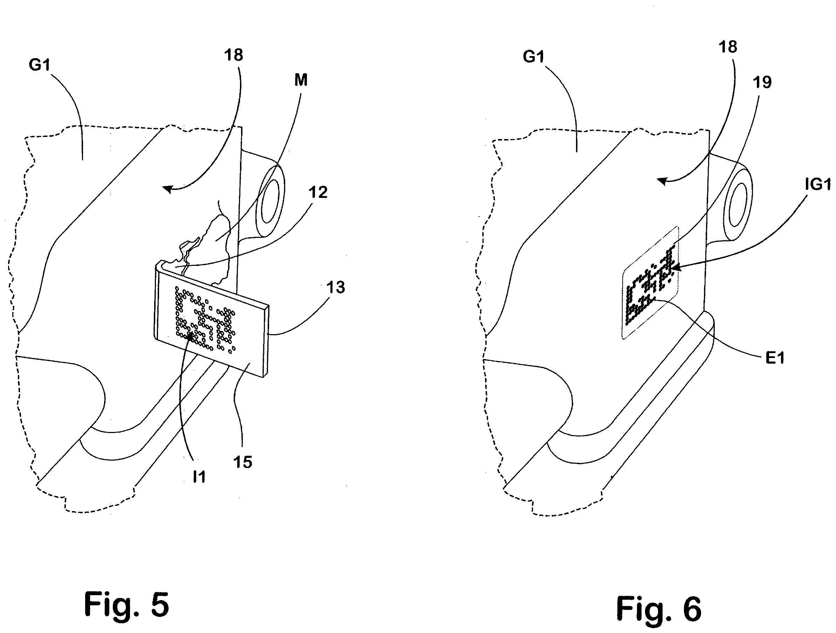

- Fig. 5: einen Ausschnitt des in der mit der gemäß Fig. 4 ausgebildeten Stirnseitenwand versehenen Gießform gemäß Fig. 1 gegossenen Gussteils vor dem Putzen in perspektivischer Ansicht;
- Fig. 6: den Ausschnitt gemäß Fig. 5 nach dem Putzen;

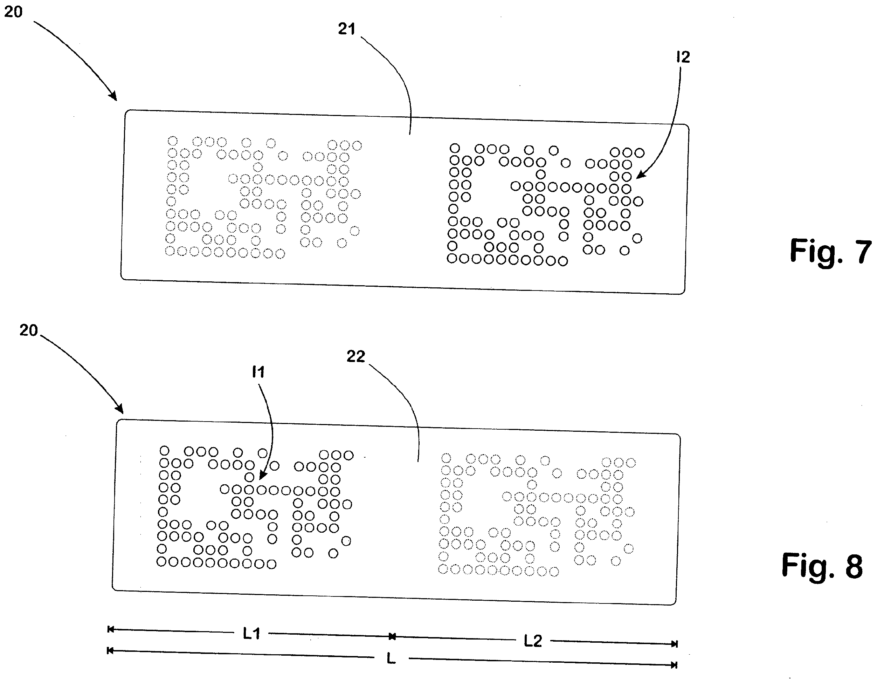

- Fig. 7: ein streifenförmiges zweites Kennzeichenelement in einer frontalen Ansicht auf seine eine Oberfläche;
- Fig. 8: das Kennzeichenelement gemäß Fig. 7 in einer frontalen Ansicht auf seine andere Oberfläche;

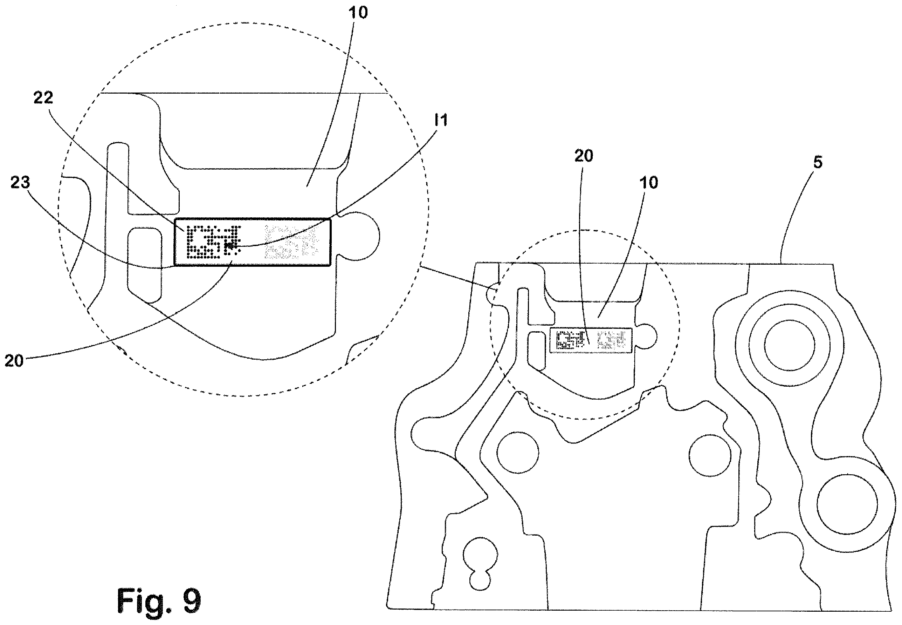

- Fig. 9: den Stirnseitenwandkern der Gießform gemäß Fig. 4 mit dem in Fig. 7 und 8 dargestellten Kennzeichenelement in einer frontalen Ansicht auf seine dem Formhohlraum der Gießform zugeordneten Seite;

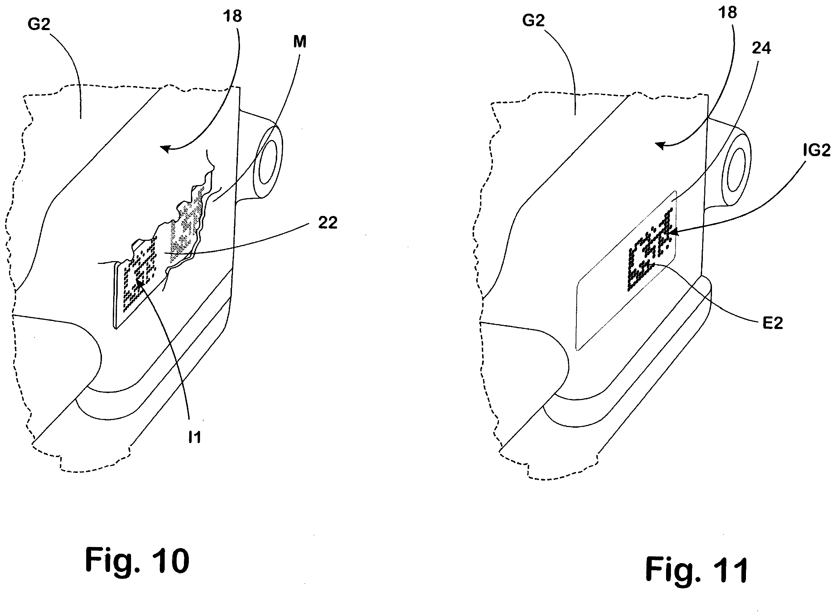

- Fig. 10: einen Ausschnitt des in der mit der gemäß Fig. 9 ausgebildeten Stirnseitenwand versehenen Gießform gemäß Fig. 1 gegossenen Gussteils vor dem Putzen in perspektivischer Ansicht;
- Fig. 11: den Ausschnitt gemäß Fig. 10 nach dem Putzen.

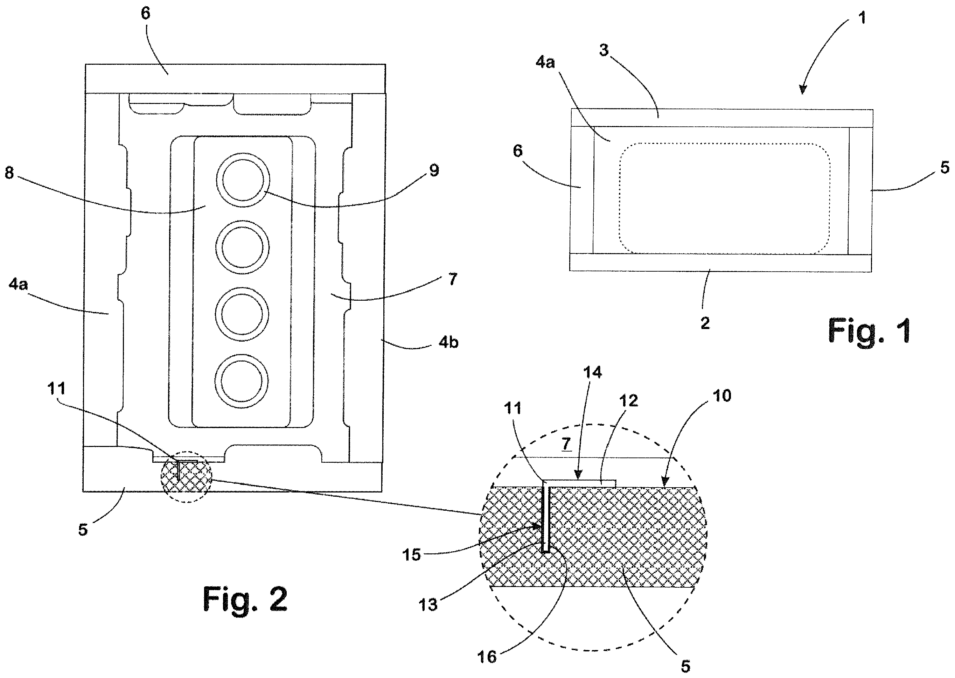

Die in Fig. 1 dargestellte Gießform 1 zum Gießen eines Gussteils G1,G2, bei dem es sich hier um ein Kurbelgehäuse für einen Verbrennungsmotor handelt, ist in konventioneller Weise als Kernpaket mit einem Bodenkern 2, einem Deckelkern 3, Längsseitenwandkernen 4a,4b und Stirnseitenwandkernen 5,6 ausgebildet. Die hier jeweils als Baueinheit dargestellten Kerne 2-6 können selbstverständlich in an sich bekannter Weise wiederum aus zwei oder mehr Einzelkernen zusammengesetzt sein.

An den Kernen 2-6 der Gießform 1 des weiteren hier der Übersichtlichkeit halber nicht dargestellten Speiser, Zuläufe, Anschnitte und desgleichen ausgebildet, über die ein von der Gießform 1 umschlossener Formhohlraum 7 mit Metallschmelze befüllt werden kann. Bei der Metallschmelze handelt es sich hier beispielsweise um eine konventionelle Aluminium-Gusslegierung.

Im Formhohlraum 7 sind weitere Gießkerne 8 und Einsätze 9 angeordnet, welche in ebenso an sich bekannter Weise im Gussteil G1,G2 Zylinder, Öl- und Wasserkanäle etc. abbilden.

Der Bodenkern 2 der Gießform 1 kann aus einem Metallwerkstoff hergestellt und wiederverwendbar sein. Dagegen sind die anderen Gießkerne 3-6,8 der Gießform 1 aus zu diesem Zweck bekanntem Formstoff hergestellt und werden bei der Entformung des Gussteils G1,G2 zerstört.

An einer dem Formhohlraum 7 zugeordneten Fläche 10 der Stirnseitenwand 5 ist ein nach Art eines Winkelstücks ausgebildetes Kennzeichenelement 11 angeordnet, das aus einem Stahlblechstreifen gekantet worden ist.

Das Kennzeichenelement 11 weist zwei rechtwinklig zueinander angeordnete Schenkel 12,13 auf, die auf ihrer vom zwischen ihnen eingeschlossenen Winkel β jeweils abgewandten Seite jeweils eine ebene Außenfläche aufweisen. Die betreffende Außenfläche des Schenkels 12 bildet dabei eine dem Formhohlraum 7 und damit dem jeweils zu gießenden Gussteil G1,G2 zugeordnete Gussteilfläche 14, wogegen die rechtwinklig dazu angeordnete Außenfläche des zweiten Schenkels 13 eine Informationsfläche 15 bildet. Sowohl an der Gussteilfläche 14 als auch an der Informationsfläche 15 ist jeweils als DMC codierte Information I1, I2 dargestellt. Die Darstellung der Information I1, I2 erfolgt dabei jeweils durch in die jeweilige Fläche einprägte, der DMC-Codierung entsprechend angeordnete nach kalottenartige Vertiefungen V1, V2 von etwa 1 mm Durchmesser.

Vor dem Abguss des Gussteils G1 steckt der Schenkel 13 des Kennzeichenelements 11, der die Informationsfläche 15 mit der Information I2 aufweist, in einer in die Fläche 10 des Stirnwandseitenkerns 5 eingeformten schlitzförmigen Aufnahme 16. Der Sitz des Schenkels 13 in der Aufnahme 16 ist dabei so passgenau, dass beim Abgießen keine Metallschmelze in die Aufnahme gelangt, insbesondere die Informationsfläche 15 im Bereich der dort angeordneten Information I2 nicht mit Metallschmelze benetzt wird. Gleichzeitig ist der Schenkel 13 soweit in die Aufnahme 16 geschoben, dass der andere Schenkel 12 des Kennzeichenelements 11 mit seiner von der Gussteilfläche 14 abgewandten Fläche 17 weitestgehend dicht an der Fläche 10 des Stirnseitenwandkerns 5 anliegt.

Beim Abgießen der Metallschmelze in den Formhohlraum 7 der Gießform 1 umströmt die Metallschmelze den Schenkel 12 des Kennzeichenelements 11, so dass einerseits die als Information I1 die Gussteilfläche 14 eingeformten Vertiefungen V1 mit Metallschmelze gefüllt werden und anderseits die Metallschmelze die Ränder des Schenkels 12 umfasst.

Spätestens mit dem Ende des Abgießens setzt die Erstarrung der in die Gießform 1 gefüllten Metallschmelze ein.

Bereits vor der vollständigen Erstarrung des Gussteils G1 kann die Gießform 1 in an sich bekannter Weise in einen Wärmebehandlungsofen gefördert werden, in dem durch Wärmezufuhr der Zerfall der Gießform 1 gefördert und gleichzeitig eine Wärmebehandlung des Gussteils G1 erfolgt. Selbstverständlich kann das Gussteil G1 auch auf jede andere Weise erstarren und anschließend entformt werden.

Nach der Erstarrung und Entformung des Gussteils G1 sitzt das Kennzeichenelement 11 fest an der Fläche 18 des Gussteils G1, die durch die Fläche 10 des Stirnseitenwandkerns 5 am Gussteil G1 abgebildet ist. Ein mindestens formschlüssiger Halt des Kennzeichenelements 11 ist dabei durch erstarrte Metallschmelze M gesichert, die beim Abguss um die Ränder des Schenkels 12 geströmt und dabei den Schenkel 12 teilweise hinterlaufen hat und so den Schenkel 12 umklammert. Dagegen ist der an seiner Informationsfläche 15 die Information I1 tragende Schenkel 13 von Metallschmelze unbenetzt geblieben. Dementsprechend kann nun die Information I1 problemlos durch eine entsprechende hier nicht gezeigte Leseeinrichtung erfasst und alle für die Qualitätssicherung und Fehlernachverfolgung notwendigen Prozessdaten anhand der Information I1 in einer Datenbank dem Gussteil G1 zugeordnet werden.

Im weiteren durchläuft das Gussteil G1 eine mechanische Nachbehandlung ("Putzen"), in der in bekannter Weise die an ihm haftenden Rückstände der Gießform, die gießtechnisch erforderlichen, jedoch für die Funktion des Gussteils nicht benötigten Formelemente sowie an Stoßstellen von Gießkernen unvermeidliche Nähte und desgleichen vom Gussteil G1 abgetrennt werden. Dabei wird das Gussteil G1 einer abschließenden Sandstrahlbehandlung unterzogen, bei der auch das Kennzeichenelement 11 vom Gussteil G1 abgetrennt und der darunter liegende, bis dahin durch den Schenkel 12 mit seiner an dem Gussteil G1 anliegenden Gussteilfläche 14 abgedeckte Flächenabschnitt 19 des Gussteils G1 freigelegt.

An dem Flächenabschnitt 19 ist nun dauerhaft die zuvor an der Gussteilfläche 14 durch die dort eingeprägten Vertiefungen V1 dargestellte Information I1 in eines entsprechenden Musters von punktartigen Erhebungen E1 abgebildet. Die so an dem Gussteil G1 ausgebildete Information IG1 kann jederzeit erneut ausgelesen werden, so dass auch nach einer langen Gebrauchsdauer des Gussteils G1 noch exakt festgestellt werden kann, wie das Gussteil G1 hergestellt worden ist und welche Verfahrensparameter dabei eingestellt worden sind.

Im Unterschied zur voranstehend erläuterten Herstellung des Gussteils G1 ist bei der Erzeugung des Gussteils G2 ein streifenförmiges, ebenfalls aus Blechmaterial hergestelltes Kennzeichenelement 20 zum Einsatz gekommen.

Die eine Oberfläche des Kennzeichenelements 20 dient dabei als Gussteilfläche 21, wogegen die an der gegenüberliegenden Seite des Kennzeichenelements 20 vorhandene Oberfläche als Informationsfläche 22 dient. Die Informationsfläche 22 und die Gussteilfläche 21 sind dabei bezogen auf die Längserstreckung L des Kennzeichenelements 20 in zwei Längshälften L1,L2 geteilt. Die Informationsfläche 22 trägt in ihrer Längshälfte L1 die ihr zugeordnete Information I1, wogegen die Gussteilfläche 21 in ihrer Längshälfte L2 die ihr zugeordnete Information I2 trägt. Bezogen auf die Längserstreckung L sind die Informationen I1,I2 von Informationsfläche 22 und Gussteilfläche 21 somit versetzt zueinander angeordnet. Die Informationen I1,I2 sind wie beim Kennzeichenelement 11 durch in die jeweilige Fläche 21,22 eingeformte Vertiefungen V1,V2 dargestellt.

Das Kennzeichenelement 20 ist ebenfalls an der Fläche 10 des Stirnwandseitenkerns 5 angeordnet. Zu diesem Zweck ist in diesem Fall dort eine Aufnahme 23 eingeformt, deren Form und Abmessungen an das Kennzeichenelement 20 so angepasst ist, dass das Kennzeichenelement 20 dicht an der ebenen Grundfläche der Aufnahme 23 anliegt und die Ränder des Kennzeichenelements 20 beim Abgießen leicht von der das Kennzeichenelement 20 anströmenden Schmelze penetriert werden können.

Nach dem Abguss und dem Erstarren der Metallschmelze zu dem Gussteil G2 umklammert das erstarrte Gussmetall die Ränder des Kennzeichenelements 20, so dass dieses nach dem Entformen ebenfalls mindestens durch Formschluss sicher und fest an dem Gussteil G2 gehalten ist. Die an der nun dicht am Gussteil G2 anliegenden Gussteilfläche 21 des Kennzeichenelements 20 vorhandene Information I2 ist dabei wie beim Gussteil G1 in den vom Kennzeichenelement 20 abgedeckten Flächenabschnitt 24 des Gussteil G2 eingestempelt worden, wogegen die an der nun frei liegenden Informationsfläche 22 des Kennzeichenelements 21 vorgesehene Information I1 frei liegt und durch eine Leseeinrichtung erfassbar ist.

Beim abschließenden Putzen des Gussteils G2 wird auch das Kennzeichenelement 20 entfernt und dadurch der zuvor von ihm abgedeckte Flächenabschnitt 24 des Gussteils G2 mit der daran abgebildeten, durch Erhebungen E2 dargestellte Information IG2 freigelegt.

Mit der Erfindung steht somit ein Verfahren zur Verfügung, mit dem sich dauerhaft mit lesbarer Information IG1,IG2 versehene Gussteile G1,G2 herstellen lassen. Dazu wird ein Kennzeichenelement 11,20, das an einer Seite eine mit Information I1,I2 versehene Informationsfläche 15,22 und an einer anderen Seite eine dem Gussteil G1,G2 zugeordnete, ebenfalls mit Information I1,I2 versehene Gussteilfläche 14,21 aufweist, an einer einem Formhohlraum 7 einer Gießform 1 zugeordneten Gießformfläche 10 so angeordnet, dass die Informationsfläche 15,22 abgedeckt ist, während die Gussteilfläche 14,21 des Kennzeichenelements 11,20 frei im Formhohlraum 7 liegt. Dann wird eine Metallschmelze M unter Benetzung der Gussteilfläche 14,21 in die Gießform 1 gegossen, so dass während des Abgießens oder Erstarrens der Metallschmelze M eine stoff-, form- oder kraftschlüssige Anbindung des Kennzeichenelements 11,20 an das Gussteil G1,G2 entsteht und sich die an der Gussteilfläche 14,21 vorhandene Information I1,I2 an der zugeordneten Fläche 18 des Gussteils G1,G2 nach Art eines Stempels abbildet. Schließlich wird das Gussteil G1,G2 aus der Gießform 1 entformt und in konventioneller Weise geputzt.

### BEZUGSZEICHEN

- 1: Gießform zum Gießen eines Gussteils G1, G2
- 2: Bodenkern der Gießform 1
- 3: Deckelkern der Gießform 1
- 4a, 4b: Längsseitenwandkerne der Gießform 1
- 5, 6: Stirnseitenwandkerne der Gießform 1
- 7: Formhohlraum der Gießform 1
- 8: Gießkerne der Gießform 1
- 9: Einsätze der Gießform 1
- 10: dem Formhohlraum 7 zugeordnete Fläche der Stirnseitenwand 5
- 11: Kennzeichenelement
- 12, 13: Schenkel des Kennzeichenelements 11
- 14: Gussteilfläche des Kennzeichenelements 11
- 15: Informationsfläche des Kennzeichenelements 11
- 16: Aufnahme in der Fläche 10
- 17: von der Gussteilfläche 14 abgewandte Fläche des Schenkels 12
- 18: durch die Fläche 10 des Stirnseitenwandkerns 5 am Gussteil G1 abgebildete Fläche
- 19: durch den Schenkel 12 mit seiner an dem Gussteil G1 anliegenden Gussteilfläche 14 abgedeckter Flächenabschnitt des Gussteils G1

- β: Winkel zwischen den Schenkeln 12, 13
- E1: die Information IG1 darstellende Erhebungen
- G1: Gussteil
- I1, I2: Information
- IG1: Information am Gussteil G1
- M: erstarrte Metallschmelze
- V1, V2: Vertiefungen

- 20: Kennzeichenelement
- 21: Gussteilfläche des Kennzeichenelements 20
- 22: Informationsfläche des Kennzeichenelements 20
- 23: Aufnahme
- 24: vom Kennzeichenelement 20 abgedeckter Flächenabschnitt des Gussteil G2

- E2: die Information IG2 darstellende Erhebungen
- G2: Gussteil
- IG2: Information des Gussteils G2
- L: Längserstreckung des Kennzeichenelements 20
- L1, L2: Längshälften des Kennzeichenelements 20

## Patentansprüche

1. Verfahren zur Herstellung eines mit lesbarer Information (IG1,IG2) versehenen Gussteils (G1,G2), umfassend folgende Arbeitsschritte:
a) Bereitstellen eines Kennzeichenelements (11, 20),
- das an einer Seite eine mit Information (I1, I2) versehene Informationsfläche (15, 22) und
- an einer anderen Seite eine dem Gussteil (G1, G2) zugeordnete Gussteilfläche (14, 21) aufweist, an der ebenfalls eine Information (I1, I2) vorhanden ist;
b) Anordnen des Kennzeichenelements (11, 20) in einer Gießform (1), die einen das zu gießende Gussteil (G1, G2) abbildenden Formhohlraum (7) umgrenzt, wobei das Kennzeichenelement (11, 20) an einer dem Formhohlraum (7) zugeordneten Gießformfläche (10) derart angeordnet wird, dass die Informationsfläche (15, 22) gegenüber dem Formhohlraum (7) abgedeckt ist, während die Gussteilfläche (14, 21) des Kennzeichenelements (11, 20) frei liegend dem Formhohlraum (7) zugeordnet ist;
c) Abgießen einer Metallschmelze (M) in die Gießform (1) unter Benetzung der Gussteilfläche (14, 21) des Kennzeichenelements (11,20) mit Metallschmelze (M) ;
d) Erstarren der Metallschmelze (M) zu dem Gussteil (G1,G2), wobei sich während des Abgießens oder des Erstarrens eine stoff-, form- oder kraftschlüssige Anbindung des Kennzeichenelements (11,20) an das Gussteil (G1, G2) ergibt und sich die an der Gussteilfläche (14, 21) vorhandene Information (I1, I2) während des Abgießens oder des Erstarrens der Metallschmelze (M) nach Art eines Stempels an der zugeordneten Fläche (18) des Gussteils (G1, G2) abbildet;
e) Entformen des Gussteils (G1, G2) aus der Gießform (1) ;
f) Putzen des Gussteils (G1, G2).

2. Verfahren nach Anspruch 1, **dadurch gekennzeichnet, dass** im Zuge einer Nachbehandlung des Gussteils (G1, G2) das Kennzeichenelement (11, 20) entfernt wird.

3. Verfahren nach einem der voranstehenden Ansprüche, **dadurch gekennzeichnet, dass** das Gussteil (G1,G2) eine Wärmebehandlung durchläuft.

4. Verfahren nach einem der voranstehenden Ansprüche, **dadurch gekennzeichnet, dass** das Gussteil (G1,G2) eine mechanische Nachbehandlung durchläuft, bei der mechanisch auf das Gussteil (G1, G2) eingewirkt wird.

5. Verfahren nach einem der voranstehenden Ansprüche, **dadurch gekennzeichnet, dass** das Kennzeichenelement (20) ein Blechstreifen ist.

6. Verfahren nach Anspruch 5, **dadurch gekennzeichnet, dass** die Information (I1) an der Informationsfläche (22) gegenüber liegend zur Information (I2) an der Gussteilfläche (21) des Kennzeichenelements (20) angeordnet ist.

7. Verfahren nach Anspruch 6, **dadurch gekennzeichnet, dass** die Informationen (I1,I2) an der Informations- (22) und der Gussteilfläche (21) des Kennzeichenelements (20) versetzt zueinander angeordnet sind.

8. Verfahren nach einem der Ansprüche 1 bis 4,
dadurch g ekennzeichnet, dass das Kennzeichenelement (11) ein Blechwinkel ist.

9. Verfahren nach Anspruch 8, **dadurch gekennzeichnet, dass** das Kennzeichenelement (11) an seinem einen Schenkel (12) die Gussteilfläche (14) und an seinem anderen Schenkel (13) die Informationsfläche (15) aufweist.

10. Verfahren nach einem der voranstehenden Ansprüche, **dadurch gekennzeichnet, dass** mindestens eine der an dem Kennzeichenelement (11, 20) vorgesehenen Informationen (I1, I2) maschinenlesbar ist.

11. Verfahren nach Anspruch 10, **dadurch gekennzeichnet, dass** die maschinenlesbare Information (I1, I2) aus Daten besteht, über die der Zeitpunkt oder die Parameter der gießtechnischen Herstellung des Gussteils (G1, G2) ermittelbar ist.

12. Verfahren nach Anspruch 11, **dadurch gekennzeichnet, dass** der am Gussteil (G1,G2) abgebildeten maschinenlesbaren Information (IG1,IG2) in einer Datenbank abgelegte Daten zugeordnet sind.

13. Verfahren nach Anspruch 12, **dadurch gekennzeichnet, dass** den am Gussteil (G1, G2) abgebildeten maschinenlesbaren Informationen (IG1, IG2) in der Datenbank zugeordneten Daten mit jedem Verfahrensschritt, den das Gussteil (G1, G2) durchläuft, weitere auslesbare Daten zugeordnet werden.

14. Verfahren nach einem der voranstehenden Ansprüche, **dadurch gekennzeichnet, dass** die Gießform (1) mindestens teilweise durch aus einem Formstoff bestehende Kerne (2-6,8) gebildet ist.

15. Verfahren nach Anspruch 14, **dadurch gekennzeichnet, dass** das Kennzeichenelement (11,20) flächenbündig in eine Fläche (10) eines der Gießkerne (2-6,8) eingesetzt ist.

## Claims

1. Method for producing a casting (G1, G2) provided with readable information (IG1, IG2), comprising the following production steps:
a) providing an identification element (11, 20),
- which on one side has an information surface (15, 22) provided with information (I1, 12) and
- on another side has a casting surface (14, 21) which is assigned to the casting (G1, G2) and on which information (I1, 12) is also present;
b) arranging the identification element (11, 20) in a casting mould (1) which defines a mould cavity (7) shaping the casting (G1, G2) to be cast, wherein the identification element (11, 20) is arranged in such a way on a casting mould surface (10) assigned to the mould cavity (7) that the information surface (15, 22) is covered with respect to the mould cavity (7), while the casting surface (14, 21) of the identification element (11, 20) is assigned to the mould cavity (7) such that it is exposed;
c) pouring a metal melt (M) into the casting mould (1) wetting the casting surface (14, 21) of the identification element (11, 20) with metal melt (M);
d) solidification of the metal melt (M) to form the casting (G1, G2), wherein during casting or solidification a firmly bonded, form-fit or force-fit connection of the identification element (11, 20) to the casting (G1, G2) is produced and the information (I1, I2) present on the casting surface (14, 21) is reproduced in the manner of a stamp on the assigned surface (18) of the casting (G1, G2) during casting or solidification of the metal melt (M);
e) removing the casting (G1, G2) from the casting mould (1) ;
f) fettling the casting (G1, G2).

2. Method according to Claim 1, **characterised in that** the identification element (11, 20) is removed in the course of a subsequent treatment of the casting (G1, G2).

3. Method according to any one of the preceding claims, **characterised in that** the casting (G1, G2) undergoes a heat treatment.

4. Method according to any one of the preceding claims, **characterised in that** the casting (G1, G2) undergoes a subsequent mechanical treatment, in which the casting (G1, G2) is acted upon mechanically.

5. Method according to any one of the preceding claims, **characterised in that** the identification element (20) is a sheet metal strip.

6. Method according to Claim 5, **characterised in that** the information (I1) on the information surface (22) is arranged opposite the information (12) on the casting surface (21) of the identification element (20).

7. Method according to Claim 6, **characterised in that** the items of information (I1, I2) on the information surface (22) and on the casting surface (21) of the identification element (20) are arranged offset in relation to one another.

8. Method according to any one of Claims 1 to 4, **characterised in that** the identification element (11) is a sheet metal angle.

9. Method according to Claim 8, **characterised in that** the identification element (11) has the casting surface (14) on its one leg (12) and has the information surface (15) on its other leg (13).

10. Method according to any one of the preceding claims, **characterised in that** at least one of the items of information (I1, I2) provided on the identification element (11, 20) is machine-readable.

11. Method according to Claim 10, **characterised in that** the machine-readable information (I1, I2) consists of data, by means of which the date the casting (G1, G2) was produced or the casting production parameters thereof can be determined.

12. Method according to Claim 11, **characterised in that** data stored in a database is assigned to the machine-readable information (IG1, IG2) reproduced on the casting (G1, G2) .

13. Method according to Claim 12, **characterised in that** with each process step which the casting (G1, G2) undergoes further readable data is assigned to data assigned in the database to the items of machine-readable information (IG1, IG2) reproduced on the casting (G1, G2).

14. Method according to any one of the preceding claims, **characterised in that** the casting mould (1) is at least partly formed by cores (2 - 6, 8) consisting of a moulding material.

15. Method according to Claim 14, **characterised in that** the identification element (11, 20) is inserted flush with the adjacent areas into a surface (10) of one of the foundry cores (2 - 6, 8).

## Revendications

1. Procédé de fabrication d'une pièce moulée (G1, G2) pourvue d'une information lisible (IG1, IG2), comportant les étapes de travail suivantes :
a) Mise à disposition d'un élément distinctif (11, 20) qui présente
- sur un côté une surface d'informations (15, 22) pourvue d'une information (I1, I2) et
- sur un autre côté une surface de pièce moulée (14, 21) associée à la pièce moulée (G1, G2), sur laquelle une information (I1, I2) est également présente ;
b) agencement de l'élément distinctif (11, 20) dans un moule (1) qui définit une cavité de moule (7) reproduisant la pièce moulée à mouler (G1, G2), où l'élément distinctif (11, 20) est agencé sur une surface de moule (10) associée à la cavité de moule (7) de telle manière que la surface d'informations (15, 22) est recouverte par rapport à la cavité de moule (7), pendant que la surface de la pièce moulée (14, 21) de l'élément distinctif (11, 20) se trouve dégagée et orientée vers la cavité de moule (7) ;
c) faire couler un métal en fusion (M) dans le moule (1) en mouillant la surface de pièce moulée (14, 21) de l'élément distinctif (11, 20) avec un métal en fusion (M) ;
d) solidification de la coulée de métal en fusion (M) sur la pièce moulée (G1, G2), où, lors de la coulée ou de la solidification, une liaison de matière, de forme ou de force de l'élément distinctif (11, 20) à la pièce moulée (G1, G2) se forme, et l'information existante (11, 12) sur la surface de la pièce moulée (14, 21) se reproduit, lors de la coulée ou de la solidification de la coulée de métal en fusion (M), à la manière d'un tampon sur la surface associée (18) de la pièce moulée (G1, G2) ;
e) démoulage de la pièce moulée (G1, G2) hors du moule (1) ;
f) nettoyage de la pièce moulée (G1, G2).

2. Procédé selon la revendication 1,
**caractérisé en ce que**
l'élément distinctif (11, 20) est enlevé lors d'un traitement ultérieur de la pièce moulée (G1, G2).

3. Procédé selon l'une des revendications précédentes,
**caractérisé en ce que**
la pièce moulée (G1, G2) subit un traitement thermique.

4. Procédé selon l'une des revendications précédentes,
**caractérisé en ce que**
la pièce moulée (G1, G2) subit un traitement mécanique ultérieur lors duquel l'on agit mécaniquement sur la pièce moulée (G1, G2).

5. Procédé selon l'une des revendications précédentes,
**caractérisé en ce que**
l'élément distinctif (20) est une bande de tôle.

6. Procédé selon la revendication 5,
**caractérisé en ce que**
l'information (I1) est agencée sur la surface d'information (22) opposée à l'information (I2) sur la surface de pièce moulée (21) de l'élément distinctif (20).

7. Procédé selon la revendication 6,
**caractérisé en ce que**
les informations (I1, I2) sont agencées décalées les unes par rapport aux autres sur les surfaces d'information (22) et de pièce moulée (21) de l'élément distinctif (20).

8. Procédé selon l'une des revendications 1 à 4,
**caractérisé en ce que**
l'élément distinctif (11) est une équerre métallique.

9. Procédé selon la revendication 8,
**caractérisé en ce que**
l'élément distinctif (11) présente sur une de ses branches (12) la surface de pièce moulée (14) et sur son autre branche (13) la surface d'information (15).

10. Procédé selon l'une des revendications précédentes,
**caractérisé en ce**
**qu'**au moins une des informations (I1, I2) pourvues sur l'élément distinctif (11, 20) est lisible par machine.

11. Procédé selon la revendication 10,
**caractérisé en ce que**
l'information lisible par machine (I1, 12) se compose de données à travers lesquelles l'on peut déterminer le moment ou les paramètres de production par technique de coulée de la pièce moulée (G1, G2).

12. Procédé selon la revendication 11,
**caractérisé en ce que**
des données enregistrées dans une base de données sont associées à l'information lisible par machine (IG1, IG2) représentée sur la pièce moulée (G1, G2).

13. Procédé selon la revendication 12,
**caractérisé en ce**
**qu'**avec chaque étape de procédé à laquelle la pièce moulée est soumise (G1, G2), d'autres données lisibles sont associées aux données associées aux informations lisibles par machine (IG1, IG2) représentées sur la pièce moulée (G1, G2) dans la base de données.

14. Procédé selon l'une des revendications précédentes,
**caractérisé en ce que**
le moule (1) est formé au moins partiellement par des noyaux (2-6, 8) se composant d'un matériau de moulage.

15. Procédé selon la revendication 14,
**caractérisé en ce que**
l'élément distinctif (11, 20) est implanté à fleur d'une surface (10) d'un des noyaux de coulée (2-6, 8).
